# EUROPEAN PATENT APPLICATION

(11) **EP 4 706 947 A1**
(43) Date of publication of application: **11.03.2026**
(21) Application number: 25196658.6
(22) Date of filing: 19.08.2025
(51) Int. Cl.: B29C 70/86

(54) **SUPPORTING DISC FOR A CAROUSEL OF A STEPPER GEARBOX**

(30) Priority: 28.08.2024 CZ 20240329; 28.08.2024 CZ 202442187 U
(71) Applicant: VÚTS, a.s., Liberec XI - Ruzodol I 460 01 Liberec (CZ)
(72) Inventor: Zboncak, Radek, 460 01 Liberec, Liberec XII - Stare Pavlovice (CZ); Ondrasek, Jiri, 460 07 Liberec, Liberec IX-Januv Dul (CZ)
(74) Representative: Musil, Dobroslav

(57) **Abstract**

The invention relates to a supporting disc (20) for a carousel (2) of a stepper gearbox, wherein the supporting disc (20) is formed by a rotating body which is provided with a central through first opening (Y) for mounting the stepper gearbox on the shaft and which is further provided with a system of second openings (Z) for mounting pulleys (A, B), wherein the second openings (Z) are arranged around the central through first opening (Y) on a pitch circle (D) at angular spacings (α) along the circumference of the supporting disc (20). The body of the supporting disc (20) consists of a fibre composite (VK), wherein the first opening (Y) and the second openings (Z) are formed in inserts (V) which are embedded in the fibre composite (VK) of the body of the supporting disc (20) and are connected to it.

## Description

### Technical field

The invention relates to a supporting disc for a carousel of a stepper gearbox, wherein the supporting disc is formed by a rotating body, which is provided with a central through first opening for mounting on a shaft of the stepper gearbox and which is further provided with a system of second openings for mounting pulleys, wherein the second openings are arranged around the central through first opening on a pitch circle at angular spacings along the circumference of the supporting disc.

### Background art

CZ patent No. 306 709 discloses a camshaft with a removable double cam, where the shaft is provided with a pair of outer polygonal contact surfaces for mounting the cams and each cam is provided with an inner polygonal contact surface. The outer polygonal contact surfaces on the shaft are conical and one such surface is formed for each cam of the double cam, while the inner polygonal contact surfaces in the cams are conical and each of the cams of the double cam is replaceably mounted with its inner conical polygonal contact surface on the corresponding outer conical polygonal contact surface on the shaft. The cams are formed from a single piece of steel using chip machining methods such as turning, grinding, milling, cutting, etc.

CZ utility model No. 33954 discloses a stepper gearbox which comprises a first shaft which is mounted in the gearbox frame. A radial double cam with a pair of cams is mounted on the first shaft, with each of the cams being assigned one system of pulleys of the gearbox carousel. The pulleys are arranged on a common pitch diameter and at angular spacings and are always mounted in a pair of supporting discs which are mounted on the second shaft of the gearbox, the second shaft of the gearbox being mounted in the gearbox frame. Both the double cam and the supporting discs are mounted on the first and second shafts by polygon bearings. Specifically, the pulleys are rotatably mounted in three parallel supporting discs, which are fixedly mounted on the second shaft of the gearbox by polygon bearings. The supporting discs, including their openings for mounting the pulleys and the central opening for mounting on the second shaft of the gearbox, are made from a single piece of steel using chip machining methods such as turning, grinding, milling, cutting, etc. The moment of inertia of the supporting discs has an impact on the dynamic properties of the gearbox, in particular the moment of inertia of the pulley system in the trio of parallel supporting discs on the second shaft of the gearbox.

The object of the invention is to eliminate or at least minimize the disadvantages of the background art.

### Summary of the invention

The object of the invention is achieved by a supporting disc for a carousel of a stepper gearbox, whose principle consists in that the body of the supporting disc is made from a fibre composite, the first opening and the second openings being formed in inserts which are embedded in the fibre composite of the supporting disc body and are connected to it.

This solution allows to increase the productivity of production by producing repeatedly several simple parts with a second opening and only one more complex part with a first opening and embedding these parts into a body made of a fibre composite, thus creating a fully-fledged supporting disc for the carousel of a stepper gearbox. Another advantage is the reduction in the weight of the supporting discs, which leads to a reduction in the moment of inertia of the carousel of the stepper gearbox while maintaining the advantageous properties of the stepper gearbox and reducing the load on the components of the stepper gearbox and accommodating both shafts of the stepper gearbox in the stepper gearbox housing. The advantage of using composite material and also using pressing technology is the possibility of using recycled fibres, which supports the modern trend of sustainability.

Preferred embodiments are obvious from the dependent claims.

### Brief description of drawings

The invention is schematically represented in a drawing, wherein Fig. 1 shows a model of the stepper gearbox according to the invention, Fig. 2 shows an example of an arrangement of the second shaft of the stepper gearbox with a system of supporting discs according to the invention, Fig. 3 shows a side view of an exemplary embodiment of the middle supporting disc of the carousel according to the invention, Figs. 4a and 4b represent views of exemplary embodiments of inserts with central first openings of the supporting disc, Figs. 5a to 5d show exemplary embodiments of inserts with second openings of the supporting disc, Figs. 6a to 6d show cross-sections of the supporting disc with inserts according to the invention.

### Examples of embodiment

The invention will be described with reference to an exemplary embodiment of a stepper gearbox which comprises a radial double cam 1, consisting of a pair of separate radial cams 10, 11, each of which is mounted on a first shaft 3, e.g., by means of polygonal shaped bearings according to CZ patent No. 306 709. Each cam 10, 11 has an active (contact) surface 100, 110 for contact with one system of pulleys A, B, which are assigned to the respective cam. The pulleys A, B are rotatably mounted along their longitudinal axis between three mutually parallel supporting discs 20, with the pulleys A, B being arranged on a common pitch diameter D and at certain mutual angular spacings α along the circumference of each supporting disc 20. The pulleys A and B are mounted between the supporting discs 20 using the second openings Z, which are arranged in the supporting discs 20 on a common pitch diameter D and at certain mutual angular spacings α. The supporting discs 20 are fixedly mounted on the second shaft 5 of the gearbox, which is rotatably mounted in the frame 4 of the gearbox, e.g. by means of polygonal-shaped bearings according to CZ patent No. 306709, etc. The stepper gearbox according to this embodiment operates in such a manner that the first shaft 3 rotates and the active (contact) surface 100, 110 of at least one radial cam 10, 11 engages with the pulleys A, B, thereby a step rotation of the second shaft 5 of the stepper gearbox, i.e., the continuous rotational movement of the first shaft 3 is converted into an uneven rotational movement of the second shaft 5, interrupted by delays in one direction, with a defined angle of rotation of the second shaft 5 in each step.

The supporting disc 20 is formed by a rotating body which is provided with a central through first opening Y for mounting on the second shaft 5 of the stepper gearbox and which is further provided with a system of second openings Z for mounting the pulleys A, B of the carousel. As already mentioned above, the second openings Z are arranged around the central through first opening Y on pitch circle D at mutual angular spacings α along the circumference of the supporting disc 20. The body of the supporting disc 20 is formed of a fibre composite VK and the first opening Y and the second openings Z are formed in inserts V which are embedded in the fibre composite VK of the body of the supporting disc 20 and are connected to the composite VK of the body of the supporting disc 20.

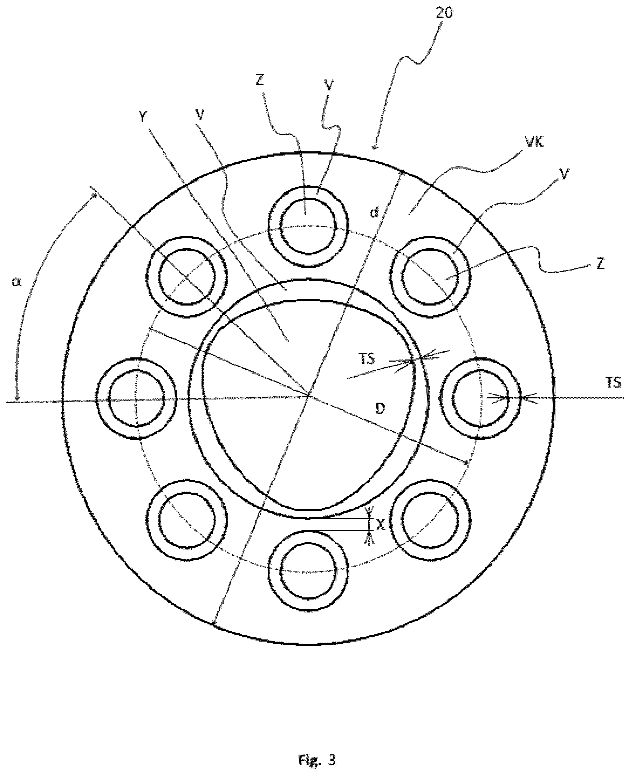

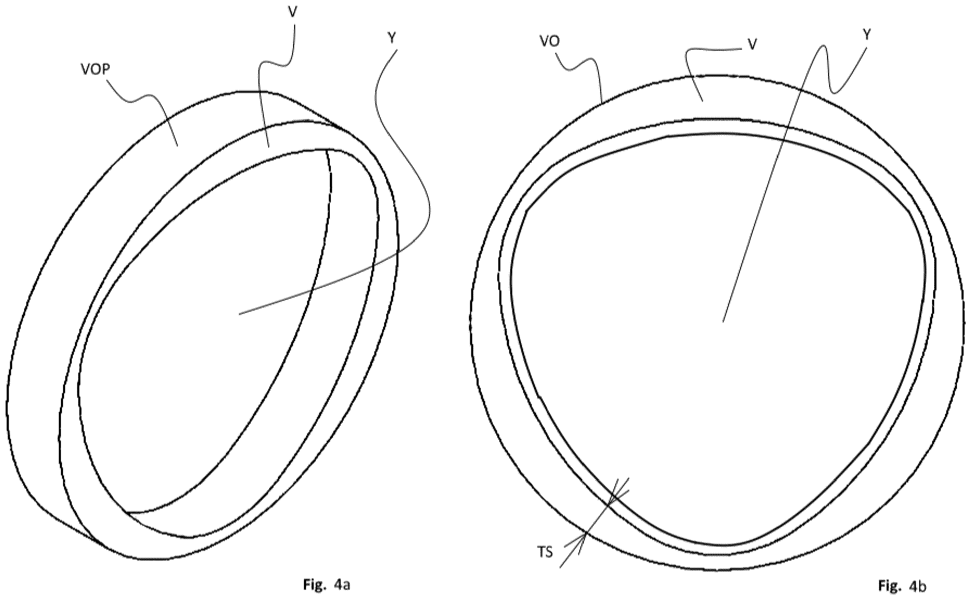

In an exemplary embodiment shown in Figs. 3, 4a, 4b, and 6a to 6d, the first opening Y has the shape of a conical polygonal surface for mounting the supporting disc 20 on the conical polygonal counter surface on the second shaft 5 of the stepper gearbox for torque transmission, e.g., according to CZ patent No. 306 709. In an unillustrated embodiment, the first opening Y has a different suitable shape for mounting the supporting disc 20 on the second shaft 5 of the stepper gearbox for torque transmission.

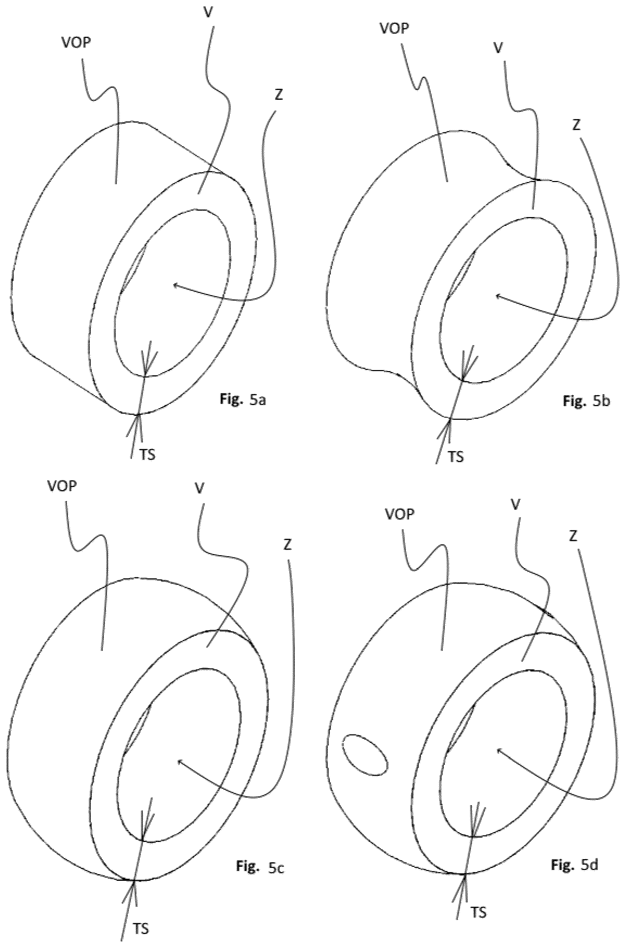

In an embodiment shown in Figs. 3, 5a to 5d and 6a to 6d, the second openings Z have a cylindrical shape, which is the simplest shape for a through-opening to manufacture. In an unillustrated embodiment, the second openings Z have another suitable shape.

The inserts V have an outer circumferential surface VOP of the same or different shapes, where a profile that is preferred is straight/cylindrical or concave or convex or combined in longitudinal section or a profile with protrusions or recesses, etc., which is advantageous for increasing the strength and durability of the connection of the respective insert V with the fibre composite VK of the body of the supporting disc 20. This shaping of the outer circumferential surface VOP applies to both the insert V with the first opening Y and the inserts V with the second opening Z.

In the illustrated embodiment, the fibre composite VK consists of a matrix of a polymer resin reinforced with carbon fibres. In another embodiment, the fibre composite VK is formed from a different material combination with corresponding physicochemical properties, i.e., another suitable combination of fibre reinforcement material and matrix material.

In an unillustrated embodiment, the fibre composite VK contains fibre reinforcement consisting of glass, aramid or basalt fibres, or fibres made of another material. Alternatively, the fibre reinforcement consists of a mixture of fibres of different materials, lengths, thicknesses, etc.

In an unillustrated embodiment, the fibre composite VK contains a matrix formed by epoxy or another suitable polymer resin, which is either thermosetting or thermoplastic with the necessary heat resistance for the operating temperatures of the gearbox in which the supporting disc 20 according to this technical solution is used.

According to a preferred embodiment, the supporting disc 20 is created by manual lamination, laying layers on top of each other, with a fibre content of 40 - 55 % by volume in the fibre composite VK with different fibre orientations in the individual layers.

According to another preferred embodiment, the supporting disc 20 is made by pressing a mixture of fibres and resin in a mould with random fibre orientation and with a fibre content of 40 to 65 % by volume in the fibre composite VK. According to another preferred embodiment, the supporting disc 20 is produced by another suitable manufacturing method with a suitable fibre content in the fibre composite VK. Preferably, the fibre content is in the range from 40 % to 65 % by volume, more preferably from 50 to 65 % by volume.

The inserts V are made of steel or non-ferrous metal or ceramic, or part of them is made of steel, part of non-ferrous metal and part of ceramic, or part of the inserts V is made of one material and part of another material, etc. In the illustrated embodiment, the insert V has a ratio of its wall thickness TS to its outer diameter in the range from 1/15 to 3/10, preferably 2/13. In an unillustrated embodiment, the insert V has another suitable ratio of its wall thickness TS to its outer diameter.

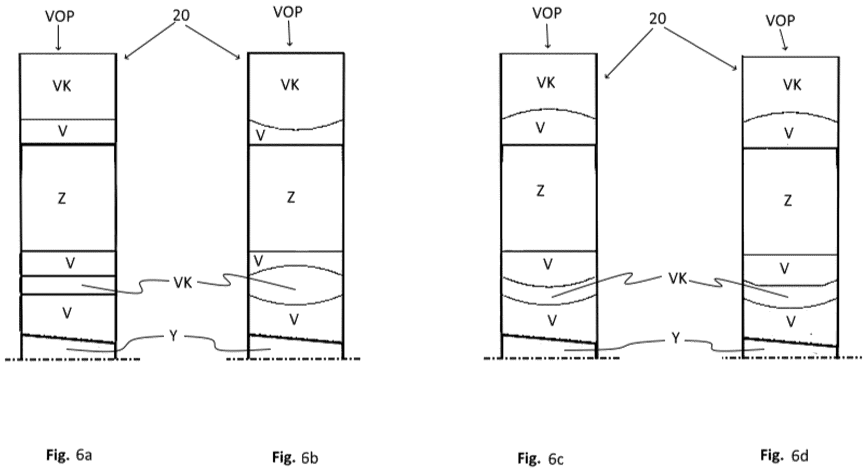

As shown in the exemplary embodiment of Figs. 3 and 6a to 6d, the inserts V have an outer circumference VO, wherein the distance X between the outer circumference VO of the insert V of the first opening Y and the outer circumference VO of the insert V of the second opening Z is at least 1 mm, but preferably at least 2 mm, the distance being filled with the fibre composite VK of the body of the supporting disc 20.

In the illustrated embodiment, the supporting disc 20 has a thickness T of 6 mm to 8 mm and an outer diameter d of 75 to 85 mm, preferably 80 mm. In another exemplary embodiment, the supporting disc 20 has at least one different dimension, in particular depending on the axial distance of the first shaft 3 and the second shaft 5 of the gearbox.

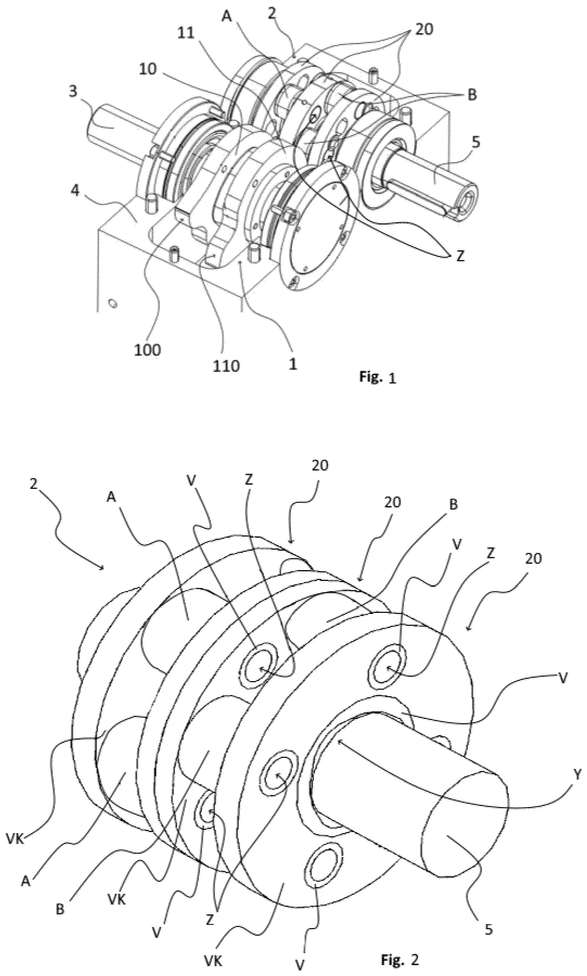

In the illustrated embodiment of Fig. 2, where the carousel has three supporting discs 20, or four supporting discs 20 with a pair of supporting discs 20 in the middle between the outer supporting discs 20, the inner supporting disc 20 has twice the number of inserts V with a second opening Z compared to the outer supporting discs 20. The number of inserts V with a second opening Z in each supporting disc 20 of the carousel 2 assembly is determined by the number of pins and pulleys A or B mounted thereon, the pulleys A or B being arranged between the respective outer supporting disc 20 and the respective inner supporting disc 20. In an unillustrated embodiment, the supporting discs 20 have a different suitable number of inserts V with a second opening Z or have the same number of inserts V with a second opening Z.

The invention is not limited to the embodiments expressly mentioned herein, particularly in terms of their dimensional and shape arrangements, but is also adequately applicable to other specific designs of stepper gearboxes and similar machine mechanisms for torque transmission.

### List of references

- 1: radial double cam
- 10: cam
- 100: active area
- 11: cam
- 110: active area
- 2: carousel
- 20: supporting disc
- 3: first shaft
- 4: frame
- 5: second shaft
- A: system of pulleys
- B: system of pulleys
- d: outer diameter of the supporting disc
- D: pitch diameter
- V: insert
- VK: fibre composite
- VO: outer circumference of the insert
- VOP: outer circumferential surface
- T: supporting disc thickness
- TS: insert wall thickness
- X: distance between the outer circumference of the first opening insert and the outer circumference of the second opening insert
- Y: first opening
- Z: second opening
- α: angular spacing

## Claims

1. A supporting disc (20) for a carousel (2) of a stepper gearbox, wherein the supporting disc (20) is formed by a rotating body which is provided with a central through first opening (Y) for mounting on a shaft of the stepper gearbox and which is further provided with a system of second openings (Z) for mounting pulleys (A, B), wherein the second openings (Z) are arranged around the central through first opening (Y) on a pitch circle (D) at angular spacings (α) along the circumference of the supporting disc (20), **characterized in that** the body of the supporting disc (20) is made from a fibre composite (VK), wherein the first opening (Y) and the second openings (Z) are formed in inserts (V) that are embedded in the fibre composite (VK) of the body of the supporting disc (20) and are connected to it.

2. The supporting disc (20) according to claim 1, **characterized in that** the first opening (Y) has the shape of a conical polygonal surface for mounting on the conical polygonal counter surface on the shaft of the stepper gearbox.

3. The supporting disc (20) according to claim 1, **characterized in that** the second openings (Z) have a cylindrical shape.

4. The supporting disc (20) according to any of claims 1 to 3, **characterized in that** the insert (V) has an outer circumferential surface (VOP) which, in longitudinal section, has a cylindrical or concave or convex or combined profile or a profile with projections or with recesses.

5. The supporting disc (20) according to any of claims 1 to 3, **characterized in that** the fibre composite (VK) is a polymer resin with reinforcing fibres.

6. The supporting disc (20) according to any of claims 1 to 5, **characterized in that** the fibre composite (VK) is a polymer matrix with reinforcing fibres containing 40 to 65 % by volume of reinforcing fibres.

7. The supporting disc (20) according to any of claims 1 to 6, **characterized in that** the insert (V) is made of steel or non-ferrous metal or ceram ic.

8. The supporting disc (20) according to any of claims 1 to 7, **characterized in that** the insert (V) has a ratio of its wall thickness (TS) to its outer diameter in the range from 1/15 to 3/10.

9. The supporting disc (20) according to any of claims 1 to 8, **characterized in that** the inserts (V) have an outer circumference (VO), wherein there is a distance (X) of at least 1 mm between the outer circumference of the insert (V) of the first opening (Y) and the outer circumference of the insert (V) of the second openings (Z).
